# EUROPEAN PATENT SPECIFICATION

(11) **EP 3 038 317 B1**
(45) Date of publication and mention of the grant of the patent: **09.09.2020**
(21) Application number: 15188383.2
(22) Date of filing: 05.10.2015
(51) Int. Cl.: H04L 29/06, G06F 21/32, H04W 12/06

(54) **USER AUTHENTICATION FOR RESOURCE TRANSFER BASED ON MAPPING OF PHYSIOLOGICAL CHARACTERISTICS**
VERFAHREN UND VORRICHTUNG ZUR ÜBERTRAGUNG VON RESSOURCEN
PROCÉDÉ ET DISPOSITIF DE TRANSFERT DE RESSOURCES

(30) Priority: 27.12.2014 CN 201410829482
(43) Date of publication of application: 29.06.2016
(73) Proprietor: Xiaomi Inc., Beijing 100085 (CN)
(72) Inventor: SHANG, Min, Haidian District Beijing 100085 (CN); SHU, Zhencai, Haidian District Beijing 100085 (CN); CHEN, Pengfei, Haidian District Beijing 100085 (CN)
(74) Representative: Sadler, Peter Frederick

(56) References cited:
- US-A1- 2002 174 344
- US-A1- 2007 061 590
- US-A1- 2014 188 730

## Description

### TECHNICAL FIELD

The present disclosure relates to the field of computer technologies and, more particularly, to a method and a device for transferring resources.

### BACKGROUND

With the rapid development of electronic commerce, it has become more and more popular for people to conduct such operations as resource transfers via a network platform. Resource transfer refers to a process of transferring resources from a first resource library to a second resource library. For example, this may include transferring money or credits online, or electronically, from one account to another account.

While transferring resources, the security during resource transfer will be ensured by using various passwords, such as a transfer password, a login password, and a short message verification code. The resources that are requested to be transferred can only be transferred out when a user inputs correct passwords.

US patent application US 2007/0061590 describes a system and method for authentication of a user's identity via biometrics. Data associated with the biometric samples provided by a user are stored in the biometric services server and the user is assigned a unique identifier. The authentication server stores biometric templates consisting of information regarding the biometric samples and type of samples, e.g. voice, retina scans, fingerprints, DNA, etc. The authentication server also stores at least one pointer to the biometrics services server providing a link between the biometric samples stored in the biometric services server and the user's biometric template(s). Identity authentication is accomplished by a series of steps including querying the user for an identifier and analyzing a biometric sample provided by the user with the biometric samples stored in the biometric services server. Once the user has been authenticated, a service provider can then securely provide services to and exchange information with the user.

US patent application US 2014/0188730 describes a method and system for preventing fraudulent transactions. An indication is received that a payment transaction has been identified as potentially fraudulent, the payment transaction involving a payment account associated with a user. A candidate voice print is received and compared to a user voice print that is associated with the payment account. The method may further include determining, based on the comparison, whether the candidate voice print matches the user voice print, and providing an indication whether the candidate voice print matches the user voice print, the indication configured for use to determine whether to approve or deny the payment transaction.

### SUMMARY

The invention is defined by the independent claims. Preferred embodiments are set out in the dependent claims. The present disclosure provides a method and a device for transferring resources. The technical solutions are as follows.

According to a first aspect of embodiments of the present disclosure, there is provided a method for transferring resources, including:

receiving at a server a resource transfer request of requesting to transfer resources sent by using a transfer account number;

detecting at the server whether a physiological characteristic collected by a mobile device bound to the transfer account number is received;
if detecting that the physiological characteristic collected by the mobile device bound to the transfer account number is received, transferring, by the server, the resources when the physiological characteristic is matched with a stored physiological characteristic model of the transfer account number; the resources being transferred according to a simplified resource transfer flow, the simplified resource transfer flow being to directly transfer the resources, or being to transfer the resources by skipping at least one of verifications of a transfer password, a verification code or received dynamic information required when transferring the resources
wherein the method further comprising transferring the resources by using a default resource transfer flow when the physiological characteristic is not matched with the stored physiological characteristic model of the transfer account number, the default resource transfer flow at least comprising verifying a transfer password required when transferring the resources. The method further comprises receiving, at the server, physiological characteristics from the mobile device at predetermined time intervals or in real time

The detecting whether the physiological characteristic collected by the mobile device bound to the transfer account number is received includes:
determining a receiving moment/time of receiving the resource transfer request; and
detecting whether the physiological characteristic collected by the mobile device bound to the transfer account number is received within a predetermined time period that includes the receiving moment.

Optionally, the method further includes:
receiving a setting command of binding the mobile device to the transfer account number; and
binding a device identity of the mobile device selected in the setting command to the transfer account number.

Optionally, the method further includes:
when no physiological characteristic model of the transfer account number is stored, establishing a physiological characteristic model of the transfer account number by using the received physiological characteristic; and
when the physiological characteristic model of the transfer account number is stored, correcting the physiological characteristic model of the transfer account number by using the received physiological characteristic if the physiological characteristic is matched with the physiological characteristic model.

Optionally, the method further includes:
detecting whether an abnormity prompting condition is satisfied when receiving the physiological characteristic sent by the mobile device bound to the transfer account number, the abnormity prompting condition including that the acquired device identity sent together with the physiological characteristic was bound to the transfer account number in the past and is not bound to the transfer account number currently, or, no physiological characteristic sent by the mobile device bound to the transfer account number is received within a predetermined duration; and
if the abnormity prompting condition exists, sending an abnormality prompt message to the transfer account number.

According to a second aspect of embodiments of the present disclosure, there is provided a device for transferring resources, including:
a first receiving module configured to receive a resource transfer request of requesting to transfer resources sent by using a transfer account number;
a first detection module configured to detect whether a physiological characteristic collected by a mobile device bound to the transfer account number is received;
a first transfer module configured to receive physiological characteristics from the mobile device at predetermined time intervals or in real time and configured to, if the first detection module detects that the physiological characteristic collected by the mobile device bound to the transfer account number is received, transfer the resources when the physiological characteristic is matched with a stored physiological characteristic model of the transfer account number the first transfer module (406, 506) being further configured to transfer the resources according to a simplified resource transfer flow, the simplified resource transfer flow being to directly transfer the resources, or being to transfer the resources by skipping at least one of verifications of a transfer password, a verification code or received dynamic information required when transferring the resources; and
a second transfer module (522) configured to transfer the resources by using a default resource transfer flow when the physiological characteristic is not matched with the stored physiological characteristic model of the transfer account number, the default resource transfer flow at least comprising verifying a transfer password required when transferring the resources.

The first detection module includes:
a determination submodule configured to determine a receiving moment of receiving the resource transfer request; and
a detection submodule configured to detect whether the physiological characteristic collected by the mobile device bound to the transfer account number is received within a predetermined time period that includes the receiving moment determined by the determination submodule.

Optionally, the device further includes:
a second receiving module configured to receive a setting command of binding the mobile device to the transfer account number; and
a binding module configured to bind a device identity of the mobile device selected in the setting command received by the second receiving module to the transfer account number.

Optionally, the device further includes:
an establishing module configured to, when no physiological characteristic model of the transfer account number is stored, establish a physiological characteristic model of the transfer account number by using the received physiological characteristic; and
a correction module configured to, when the physiological characteristic model of the transfer account number is stored, correct the physiological characteristic model of the transfer account number by using the received physiological characteristic if the physiological characteristic is matched with the physiological characteristic model.

Optionally, the device further includes:
a second detection module configured to detect whether an abnormity prompting condition is satisfied when receiving the physiological characteristic sent by the mobile device bound to the transfer account number, the abnormity prompting condition including that the acquired device identity sent together with the physiological characteristic was bound to the transfer account number in the past and is not bound to the transfer account number currently, or, the physiological characteristic sent by the mobile device bound to the transfer account number is not received within a predetermined duration; and
a sending module configured to send an abnormality prompt message to the transfer account number when the second detection module detects the existence of the abnormity prompting condition.

According to a third aspect of embodiments of the present disclosure, there is provided a device for transferring resources, including:
a processor; and
a memory for storing instructions executable by the processor;
wherein the processor is configured to carry out the method according to the first aspect.

The present invention also provides a computer program, which when executing on a processor of a server, performs the above method.

The technical solutions provided by the embodiments of the present disclosure may include the following advantageous effects:
while receiving the request of requesting to transfer resources by the transfer account, if detecting that the received physiological characteristic is matched with the physiological characteristic model of the transfer account number, the requested resources are transferred; since a server may match the received physiological characteristic with the physiological characteristic model, and directly transfer the resources after successful matching, the present disclosure solves the problem of complicated resource transfer flow caused by various passwords used for ensuring the resource transfer security during the resource transfer process, and achieves the effects of reducing the complexity of the resource transfer flow while ensuring the security.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a block diagram of an implementation circumstance related to a method for transferring resources, according to some of exemplary embodiments.
Fig. 2 is a flow chart of a method for transferring resources, according to an exemplary embodiment.
Fig. 3A is a flow chart of a method for transferring resources, according to another exemplary embodiment.
Fig. 3B is a flow chart of binding a transfer account number to a device identity, according to an exemplary embodiment.
Fig. 3C is a flow chart of establishing and updating a physiological characteristic model, according to an exemplary embodiment.
Fig. 3D is a flow chart of abnormality prompting, according to an exemplary embodiment.
Fig. 4 is a block diagram of a device for transferring resources, according to an exemplary embodiment.
Fig. 5 is a block diagram of a device for transferring resources, according to another exemplary embodiment.
Fig. 6 is a block diagram of a device for transferring resources, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

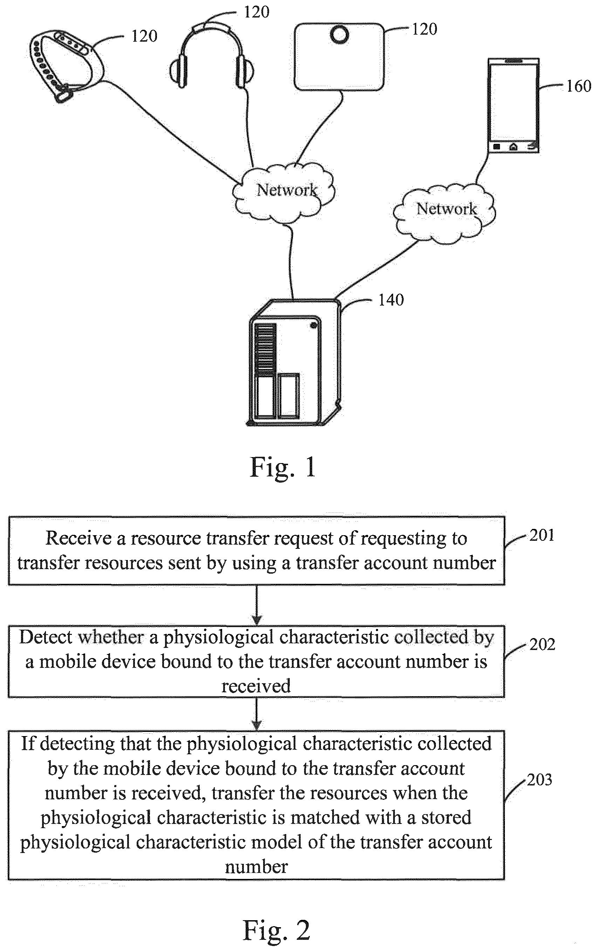

Fig. 1 is a block diagram of an implementation circumstance related to a method for transferring resources, according to some of exemplary embodiments. As shown in Fig. 1, the implementation circumstance may include at least a mobile device 120, a server 140, and a transfer request terminal 160.

The mobile device 120 is usually provided with a sensor for collecting the physiological characteristics of a user, such as one or more of a cardiac rate, a blood pressure, an arm swing amplitude, a fingerprint, and face information. The mobile device 120 usually refers to a device that is frequently carried or worn by the user, for instance, a user-wearable device that can be worn on the body of the user such as a smartband, a smart key ring, a smart watch, a smart tie clip, and a smart ring; in this way, the physiological characteristics of the user can be collected at any time.

The transfer request terminal 160 may be an electronic device for requesting to transfer resources. The electronic device may be a smartphone, a tablet, a smart TV, an e-book reader, a multimedia player, a portable laptop computer, and a desktop computer having a resource transfer function, and the like.

The server 140 may be respectively connected with the mobile device 120 and the transfer request terminal 160 through a wired network manner or a wireless network manner.

The server 140 may receive the physiological characteristic collected in real time and sent by the mobile device 120, may receive a resource transfer request sent by the transfer request terminal 160, and handle the resource transfer request according to the physiological characteristic. The server 140 involved here may be one server, or a server cluster consisting of a plurality of servers, or a cloud computing service center. The server 140 may be a background server for payment.

The resources requested to be transferred by the transfer request terminal 160 are determined whether to be capable of being transferred without such verification flow as transfer password and the like according to such information.

Fig. 2 is a flow chart of a method for transferring resources, according to an exemplary embodiment. As shown in Fig. 2, the method for transferring resources is applied in the server 140 in the implementation circumstance as shown in Fig. 1, including the following steps.

In step 201, a resource transfer request of requesting to transfer resources sent by using a transfer account number is received.

In step 202, whether a physiological characteristic collected by a mobile device bound to the transfer account number is received is detected.

In step 203, if detecting that the physiological characteristic collected by the mobile device bound to the transfer account number is received, the resources are transferred when the physiological characteristic is matched with a stored physiological characteristic model of the transfer account number.

If detecting that the physiological characteristic collected by the mobile device bound to the transfer account number is received, the server may calculate a matching degree between the physiological characteristic and the stored physiological characteristic model of the transfer account number. When the calculated value of the matching degree is greater than a predetermined matching threshold, the physiological characteristic is determined to be matched with the stored physiological characteristic model of the transfer account number.

In conclusion, while receiving the transfer resource request of the transfer account number, if detecting that the received physiological characteristic is matched with the physiological characteristic model of the transfer account number within the predetermined time period, the requested resources are transferred; since the server may match the received physiological characteristic with the physiological characteristic model, and directly transfer the resources after successful matching, the method for transferring resources provided in the embodiments solve the problem of complicated resource transfer flow caused by various passwords used for ensuring the resource transfer security during the resource transfer process, and achieves the effects of reducing the complexity of the resource transfer flow while ensuring the security.

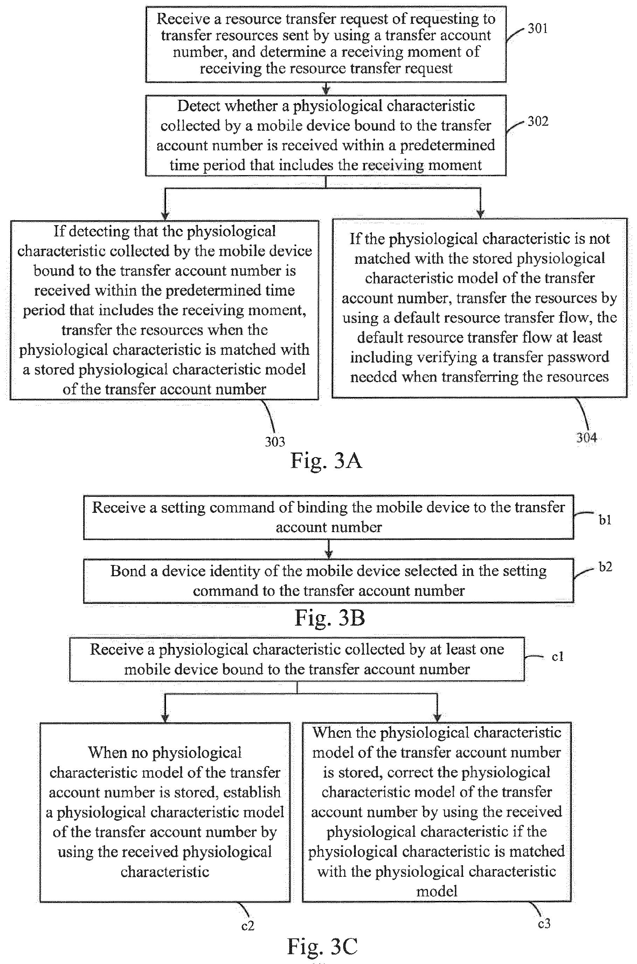

Fig. 3A is a flow chart of a method for transferring resources, according to another exemplary embodiment. As shown in Fig. 3A, the method for transferring resources is applied in the server 140 in the implementation circumstance as shown in Fig. 1, including the following steps.

In step 301, a resource transfer request of requesting to transfer resources sent by using a transfer account number is received, and a receiving moment, or receiving time, of receiving the resource transfer request is determined.

A server, when receiving the resource transfer request of requesting to transfer resources sent by using the transfer account number, may record the moment of receiving the resource transfer request, i.e., the receiving moment.

Optionally, the resource transfer request carries the transfer account number therein.

Optionally, the resource transfer request is sent by the transfer request terminal 160 in the implementation circumstance of Fig. 1. For example, when a user logs in to the transfer account number at the transfer request terminal 160, and requests to transfer some resources under the transfer account number, the transfer request terminal 160 may send a resource transfer request to the server under the control of the user, the resource transfer request carrying the transfer account number and a resource value needing to be transferred therein. Usually, the resource transfer request further includes an identity of a first resource library or account in which the resources corresponding to the resource value is located, and an identity of a second resource library or account to which the resources will be transferred. That is, the resource transfer request is usually used for instructing the transfer account number to request to transfer the resources having a designated resource value in the first resource library to the second resource library.

In practical applications, the information carried in the resource transfer request may be set according to the actual application scenes, and will not be defined in the embodiment.

In step 302, it is determined whether a physiological characteristic collected by a mobile device bound to the transfer account number is received within a predetermined time period that includes the receiving moment at which the resource transfer request is received.

During practical implementation, a sensor may be arranged on the mobile device. The sensor may be configured to collect some physiological characteristics of the user, wherein the physiological characteristics may include one or more of a cardiac rate, a blood pressure, an arm swing amplitude and frequency, fingerprint information, face information, weight information, and the like. For example, some sensors may collect the cardiac rate of the user, some can collect the blood pressure of the user, and some can collect the arm swing amplitude and frequency of the user while walking. Optionally, the physiological characteristics collected by different mobile devices may be different. Optionally, one mobile device may collect at least one physiological characteristic.

Optionally, when the mobile device collects the physiological characteristic, the mobile device may send the collected physiological characteristic to the server every predetermined time interval or in real time. Accordingly, the server may receive the physiological characteristic collected by the mobile device. The predetermined time interval here may be set according to actual demands. When the physiological characteristics need to be frequently sent to the server so as to ensure or improve the security while transferring resources, the predetermined time interval may be set relatively small; while when the network status between the server and the mobile device is poor, the predetermined time interval may be set relatively large. The particular value of the predetermined time interval will, therefore, not be defined in the present disclosure.

The server, when detecting whether the physiological characteristic collected by the mobile device bound to the transfer account number is received within the predetermined time period including the receiving moment, includes the following steps.

First, a device identity of the mobile device bound to the transfer account number is determined.

A binding relationship between the device identity of the mobile device and the transfer account number may be stored in the server. When the server receives the resource transfer request sent by the transfer account number, the device identity bound to the transfer account number may be found out according to the stored binding relationship.

Optionally, the server may also acquire the stored binding relationship between the device identity of the mobile device and the transfer account number from other device or server, and find out the device identity bound to the transfer account number according to the acquired binding relationship when receiving the resource transfer request sent by the transfer account number.

Optionally, the server may also send a search request to another device or server that stores the binding relationship between the device identity of the mobile device and the transfer account number when receiving the resource transfer request sent by the transfer account number, the search request being configured to request to search the device identity bound to the transfer account number, and receive the device identity searched by these devices or servers according to the search request.

In addition to the above several manners, the person skilled in the art would be aware of other manners for the server to determine the device identity of the mobile device bound to the transfer account number, which will not be described further in the embodiment.

Second, it is determined whether a physiological characteristic sent together with the device identity of the mobile device is received within a predetermined time period that takes the receiving moment, at which the resource transfer request is received, as a designated moment, the designated moment being an initial moment, an end moment or an intermediate moment of the predetermined time period.

In one case, the server may detect whether the physiological characteristic sent together with the device identity of the mobile device is received within the predetermined time period that takes the receiving moment as the initial moment. That is, the server, after receiving the resource transfer request, may detect whether the physiological characteristic sent together with the device identity of the mobile device is received within the predetermined time period which is started from the receiving moment.

Or, in another case, the server may detect whether the physiological characteristic sent together with the device identity of the mobile device is received within the predetermined time period that takes the receiving moment as the end moment.

Or, in yet another case, the server may detect whether the physiological characteristic sent together with the device identity of the mobile device is received within the predetermined time period that takes the receiving moment as the intermediate moment.

All the predetermined time periods that include the receiving moment are applicable, which are not limited to the initial moment, the end moment or the intermediate moment only. The predetermined time period may, instead, be a time period with an end moment before the receiving moment, or the predetermined time period may be a time period with an initial moment after the receiving moment. The relationship between the receiving moment and the predetermined time period may be set according to the actual demands.

Generally speaking, the mobile device, after collecting the physiological characteristic, may send the physiological characteristic to the server. While sending the physiological characteristic to the server, the mobile device also sends the device identity of the mobile device together with the physiological characteristic so that the server can distinguish which mobile device sends the physiological characteristic, wherein the device identity here is configured to uniquely identify the mobile device.

In step 303, if detecting that the physiological characteristic collected by the mobile device bound to the transfer account number is received within the predetermined time period that includes the receiving moment, the resources are transferred when the physiological characteristic is matched with a stored physiological characteristic model of the transfer account number.

If detecting that the physiological characteristic collected by the mobile device bound to the transfer account number is received within the predetermined time period that includes the receiving moment, the server may calculate a matching degree between the physiological characteristic and the stored physiological characteristic model of the transfer account number. When the calculated value of the matching degree is greater than a predetermined matching threshold, the physiological characteristic is determined to be matched with the stored physiological characteristic model of the transfer account number.

The predetermined matching threshold may be set according to the actual situation, and the specific value of the predetermined matching threshold will not be defined in the embodiment. Generally, the higher the predetermined matching threshold is , and when the calculated value of the matching degree is greater than the predetermined matching threshold, the physiological characteristic is better matched with the stored physiological characteristic model of the transfer account number.

When the physiological characteristic is matched with the stored physiological characteristic model of the transfer account number, it usually indicates that the resource transfer is relatively safe at this moment. In order to reduce the transfer complexity caused by various passwords (for instance, a transfer password, and a verification code) that need to be considered for the security while transferring resources, the resources may be transferred according to a simplified resource transfer flow. The simplified resource transfer flow here is to directly transfer the resources, or to transfer the resources by skipping at least one of verifications of the transfer password, a verification code or received dynamic information needed when transferring the resources.

That is, when the resource transfer flow usually includes verifications of the transfer password, the verification code, or the received dynamic information, at least one or more of the verifications may be skipped at this moment, and then a flow that is not skipped is directly conducted to finish transferring the resources. For instance, the resource transfer flow includes verifications of the transfer password and the verification code. If the verification of the verification code is skipped, then it only needs to verify the transfer password at this moment. After the transfer password is successfully verified, the resources are transferred.

In step 304, when the physiological characteristic is not matched with the stored physiological characteristic model of the transfer account number, the resources are transferred by using a default resource transfer flow, the default resource transfer flow at least including verifying the transfer password needed when transferring the resources.

The server calculates a matching degree between the physiological characteristic and a stored physiological characteristic model of the transfer account number. When the calculated value of the matching degree is less than a predetermined matching threshold, then the physiological characteristic is determined to be not matched with the stored physiological characteristic model of the transfer account number.

When the physiological characteristic is not matched with the stored physiological characteristic model of the transfer account number, it usually indicates that it is not safe to transfer the resources at this moment. For example, an illegal user may be using the mobile device of a legal user to request to transfer resources. At this moment, in order to ensure the security while transferring the resources, the default resource transfer flow may be used to transfer the resources, for instance, the default resource transfer flow at least including verifying the transfer password needed when transferring the resources.

Generally, according to the actual transfer demands, the default resource transfer flow may include verifying the verification code needed when transferring the resources, and the like.

In conclusion, while receiving the transfer resource request of the transfer account number, if it is determined that the received physiological characteristic is matched with the physiological characteristic model of the transfer account number within the predetermined time period, the requested resources are transferred; since the server may match the received physiological characteristic with the physiological characteristic model, and directly transfer the resources after successful matching. The method for transferring resources provided in the embodiments solve the problem of complicated resource transfer flow caused by various passwords used for ensuring the resource transfer security during the resource transfer process, and achieves the effect of reducing the complexity of the resource transfer flow while ensuring the security.

While receiving the transfer resource request of the transfer account number, if it is determined that the received physiological characteristic is not matched with the physiological characteristic model of the transfer account number within the predetermined time period, the resources are transferred by using the default resource transfer flow; since the default resource transfer flow further includes the process of verifying the transfer password while transferring the resources, the security of the transfer account number while transferring the resources can be ensured.

Based on the embodiment as shown in Fig. 3A, in an optional implementation manner, the server, when transferring the resources, may firstly bind the transfer account number to the device identity of the mobile device set by the user, and store the binding relationship between the transfer account number and the device identity bound to the transfer account number. Fig. 3B is a flow chart of binding the transfer account number to the device identity, according to an exemplary embodiment. With reference to Fig. 3B, the method for transferring resources may further include the following binding process.

In step b1, a setting command of binding the mobile device to the transfer account number is received.

During practical applications, the user may select to bind any mobile device being used to any transfer account number being used. For instance, a setting terminal used by the user receives the device identity of the mobile device selected by the user, and sends a setting command to bind a mobile device to the transfer account number logged in by the user. Accordingly, the setting command of binding the mobile device to the transfer account number may be received by the server.

Optionally, when the transfer account number of the user is not bound to a mobile device, the server may send a binding recommendation to the transfer account number to inform the user that a mobile device can be bound, so as to shorten the flow while transferring resources.

In step b2, the device identity of the mobile device selected in the setting command is bound to the transfer account number.

The server, after receiving the setting command to bind the mobile device to the transfer account number, may bind the device identity of the mobile device selected in the setting command to the transfer account number, and stores the binding relationship between the transfer account number and the device identity.

Optionally, when the transfer account number of the user is bound, the user may also cancel the binding relationship between a certain or some mobile devices and the transfer account number. For instance, when a certain mobile device of the user bound to the transfer account number is lost, in order to ensure the security of the transfer account number and guarantee the precision of the physiological characteristic model corresponding to the transfer account number, the user may use the transfer account number to send a request to cancel binding (i.e., a binding cancellation request) to the server, wherein the request for cancelling binding carries therein an identity of the device to be cancelled. Accordingly, the sever, after receiving the request for cancelling binding sent by the transfer account number, may cancel the device identity bound to the transfer account number and carried in the request to cancel binding, and may also determine the device identity carried in the request to cancel binding as a device identity that was bound to the transfer account number in the past.

In conclusion, through binding the transfer account number to the device identity and storing them so as to be capable of determining whether to directly transfer the resources according to the physiological characteristic corresponding to the bound device identity when receiving the resource transfer request sent by the transfer account number, the method for transferring resources provided by embodiments of the present disclosure simplify the verification flow while transferring resources.

Based on the embodiment in Fig. 3A, in an optional implementation manner, Fig. 3C is a flow chart of establishing and updating a physiological characteristic model, according to an exemplary embodiment. At this moment, the method for transferring resources may also include the following steps.

In step c1, a physiological characteristic collected by at least one mobile device bound to the transfer account number is received.

Since the mobile device always sends the collected physiological characteristic and the device identity of the mobile device to the server when sending the physiological characteristic to the server, the server may determine the device identity of the mobile device bound to the transfer account number firstly, and then find out the physiological characteristic received together with the device identity according to the device identity, i.e., receive the physiological characteristic collected by at least one mobile device bound to the transfer account number.

In step c2, when no physiological characteristic model of the transfer account number is stored, a physiological characteristic model of the transfer account number is established by using the received physiological characteristic.

When the server does not establish a physiological characteristic model for the transfer account number, then the server may establish the physiological characteristic model of the transfer account number by using the received physiological characteristic.

In step c3, when the physiological characteristic model of the transfer account number is stored, the physiological characteristic model of the transfer account number is corrected by using the received physiological characteristic if the physiological characteristic is matched with the physiological characteristic model.

When the server has already established the physiological characteristic model for the transfer account number, in order to improve the identifying precision of the physiological characteristic model on the user of the transfer account number, the physiological characteristic model of the transfer account number may further be corrected by using the received physiological characteristic.

However, when the physiological characteristic is not matched with the physiological characteristic model, it usually indicates that the mobile device of the physiological characteristic is abnormal. At this moment, in order to avoid disturbance on the physiological characteristic model of the transfer account number, the received physiological characteristic may not be used to correct the physiological characteristic model of the transfer account number. Optionally, the server may save the abnormalities, so that the server selects different payment flows while transferring the resources corresponding to the transfer account number in later stages according to these abnormalities.

In conclusion, the method for transferring resources provided in embodiments of the present disclosure establishes the physiological characteristic model for the transfer account number by using the received physiological characteristic collected by at least one mobile device bound to the transfer account number, or, corrects the physiological characteristic model of the transfer account number by using the received physiological characteristic when the physiological characteristic model of the transfer account number is stored and the physiological characteristic is matched with the physiological characteristic model; and establishes the physiological characteristic model according to the course of learning, and continuously updates and perfects the physiological characteristic model, so that the physiological characteristic model can identify the user corresponding to the transfer account number more precisely, so as to improve the resource transfer security.

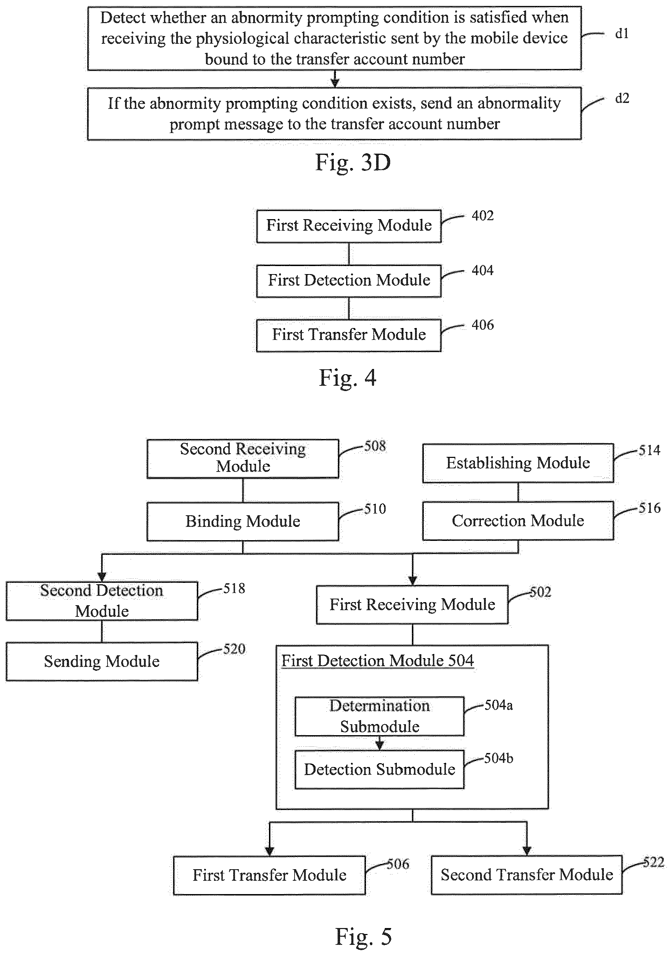

Based on the embodiment in Fig. 3A, in an optional implementation manner, Fig. 3D is a flow chart of abnormality prompting, according to an exemplary embodiment. The method for transferring resources may also include the following steps.

In step d1, whether an abnormity prompting condition is satisfied is determined when receiving the physiological characteristic sent by the mobile device bound to the transfer account number.

The abnormity prompting condition includes that the acquired device identity sent together with the physiological characteristic was bound to the transfer account number in the past and is not bound to the transfer account number currently, or, the physiological characteristic sent by the mobile device bound to the transfer account number is not received within a predetermined duration.

Since the mobile device, when sending the physiological characteristic to the server, always sends the collected physiological characteristic and the device identity of the mobile device to the server, the server, when receiving the physiological characteristic, may acquire the device identity sent together with the physiological characteristic. When the mobile device bound to the transfer account number is lost, a legal user will usually cancel the binding between the mobile device and the transfer account number, so as to avoid the physiological characteristic collected by the mobile device from continuously correcting the physiological characteristic model of the transfer account number of the user to cause inaccuracy of the physiological characteristic model. Therefore, if the device identity of a certain mobile device was bound to a certain transfer account number in the past, but is cancelled from being bound to the transfer account number later, when the physiological characteristic sent by the mobile device is received again, an abnormality condition is deemed to have occurred, i.e., the abnormity prompting condition is satisfied, and abnormality prompting needs to be conducted to the user.

In another case, when the physiological characteristic sent by the mobile device bound to the transfer account number is not received within a predetermined duration, it usually indicates that the mobile device is not connected for a long time, or the system of the mobile device is refreshed (the device identity of the mobile device with a refreshed system may be possibly refreshed); therefore, the system cannot acquire or recognize the physiological characteristic acquired by the mobile device, and thus cannot correct the physiological characteristic model in real time. At this moment, an abnormality condition is deemed to be occurred, i.e., the abnormity prompting condition is satisfied, and abnormality prompting needs to be conducted to the user.

In step d2, if the abnormity prompting condition exists, an abnormality prompt message is sent to the transfer account number.

Optionally, the server, after sending the abnormality prompt message to the transfer account number, may save the abnormality prompt message and record the saving moment. If a resource transfer request sent by the transfer account number is received within a predetermined duration from the saving moment, then the resources are transferred by using a default resource transfer flow, the default resource transfer flow at least including verifying the transfer password needed when transferring the resources, so as to ensure the resource transfer security.

Optionally, after sending the abnormality prompt message to the transfer account number, if a resource transfer request is subsequently received, the resources requested to be transferred may be transferred by using the default resource transfer flow in order to ensure the resource transfer security, the default resource transfer flow at least including verifying the transfer password needed when transferring the resources.

In conclusion, the method for transferring resources provided by embodiments of the present disclosure, when receiving the physiological characteristic, acquires the device identity sent together with the physiological characteristic, and sends the abnormality prompt message to the transfer account number when the device identity was bound to the transfer account number in the past and is not bound to the transfer account number currently, so as to be capable of informing the abnormality to the user in time, thus improving the user experience and security.

The method for transferring resources provided by embodiments of the present disclosure, after sending the abnormality to the transfer account number, transfers the resources by using the default resource transfer flow if the resource transfer request sent by the transfer account number is received within a predetermined duration, so as to ensure the resource transfer security.

It should be additionally noted that the foregoing Fig. 3A may either be solely implemented as a method for transferring resources, or be implemented together with one, two or all of Fig. 3B, Fig. 3C and Fig. 3D as a method for transferring resources.

Embodiments of devices of the present disclosure are described hereinafter, which may be used for performing embodiments of methods of the present disclosure. For the details not described in the embodiments of devices of the present disclosure, please refer to the embodiments of methods of the present disclosure.

Fig. 4 is a block diagram of a device for transferring resources, according to an exemplary embodiment. As shown in Fig. 4, the device for transferring resources is applied in the server 140 in the implementation circumstance as shown in Fig. 1. The device for transferring resources includes, but is not limited to: a first receiving module 402, a first detection module 404 and a first transfer module 406.

The first receiving module 402 is configured to receive a resource transfer request of requesting to transfer resources sent by using a transfer account number.

The first detection module 404 is configured to detect or determine whether a physiological characteristic collected by a mobile device bound to the transfer account number is received.

The first transfer module 406 is configured to, when the first detection module 404 detects that the physiological characteristic collected by the mobile device bound to the transfer account number is received, transfer the resources when the physiological characteristic is matched with a stored physiological characteristic model of the transfer account number.

In conclusion, while receiving the transfer resource request of the transfer account number, if detecting that the physiological characteristic received is matched with the physiological characteristic model of the transfer account number within the predetermined time period, the requested resources are transferred; since the server may match the physiological characteristic received with the physiological characteristic model, and directly transfer the resources after successful matching, the device for transferring resources provided in the embodiment solves the problem of complicated resource transfer flow caused by various passwords used for ensuring the resource transfer security during the resource transfer process, and achieves the effects of reducing the complexity of the resource transfer flow while ensuring the security.

Fig. 5 is a block diagram of a device for transferring resources, according to another exemplary embodiment. As shown in Fig. 5, the device for transferring resources is applied in the server 140 in the implementation circumstance as shown in Fig. 1. The device for transferring resources includes, but is not limited to: a first receiving module 502, a first detection module 504 and a first transfer module 506.

The first receiving module 502 is configured to receive a resource transfer request of requesting to transfer resources sent by a transfer account number.

The first detection module 504 is configured to detect or determine whether a physiological characteristic collected by a mobile device bound to the transfer account number is received.

The first transfer module 506 is configured to, when the first detection module 504 detects that the physiological characteristic collected by the mobile device bound to the transfer account number is received, transfer the resources when the physiological characteristic is matched with a stored physiological characteristic model of the transfer account number.

In an optional implementation manner, the first detection module 504 may include: a determination submodule 504a and a detection submodule 504b.

The determination submodule 504a is configured to determine a receiving moment of receiving the resource transfer request.

The detection submodule 504b is configured to detect of determine whether the physiological characteristic collected by the mobile device bound to the transfer account number is received within a predetermined time period that includes the receiving moment determined by the determination submodule 504a.

In an optional implementation manner, the device for transferring resources may also include: a second receiving module 508 and a binding module 510.

The second receiving module 508 is configured to receive a setting command of binding the mobile device to the transfer account number.

The binding module 510 is configured to bind the device identity of the mobile device selected in the setting command received by the second receiving module 508 to the transfer account number.

In an optional implementation manner, the device for transferring resources may also include: an establishing module 514 and a correction module 516.

The establishing module 514 is configured to, when the physiological characteristic model of the transfer account number is not stored, establish a physiological characteristic model of the transfer account number by using the received physiological characteristic.

The correction module 516 is configured to, when the physiological characteristic model of the transfer account number is stored, correct the physiological characteristic model of the transfer account number by using the received physiological characteristic if the physiological characteristic is matched with the physiological characteristic model.

In an optional implementation manner, the device for transferring resources may also include: a second detection module 518 and a sending module 520.

The second detection module 518 is configured to detect whether an abnormity prompting condition is satisfied when receiving the physiological characteristic sent by the mobile device bound to the transfer account number, the abnormity prompting condition including that the acquired device identity sent together with the physiological characteristic was bound to the transfer account number in the past and is not bound to the transfer account number currently, or, the physiological characteristic sent by the mobile device bound to the transfer account number is not received within a predetermined duration.

The sending module 520 is configured to send an abnormality prompt message to the transfer account number when the second detection module 518 detects the existence of the abnormity prompting condition.

In an optional implementation manner, the first transfer module 506 may also be configured to:

transfer the resources according to a simplified resource transfer flow, the simplified resource transfer flow being to directly transfer the resources, or being to transfer the resources by skipping at least one of verifications of a transfer password, a verification code or received dynamic information needed when transferring the resources.

In an optional implementation manner, the device for transferring resources may also include: a second transfer module 522.

The second transfer module 522 is configured to transfer the resources by using a default resource transfer flow when the physiological characteristic is not matched with the stored physiological characteristic model of the transfer account number, the default resource transfer flow at least including verifying the transfer password required when transferring the resources.

In conclusion, while receiving the transfer resource request of the transfer account number, if detecting that the received physiological characteristic is matched with the physiological characteristic model of the transfer account number within the predetermined time period, the requested resources are transferred; since the server may match the physiological characteristic received with the physiological characteristic model, and directly transfer the resources after successful matching, the device for transferring resources provided in the embodiment solves the problem of complicated resource transfer flow caused by various passwords used for ensuring the resource transfer security during the resource transfer process, and achieves the effects of reducing the complexity of the resource transfer flow while ensuring the security.

While receiving the transfer resource request of the transfer account number, if it is detected that the physiological characteristic received is not matched with the physiological characteristic model of the transfer account number within the predetermined time period, the device for transferring resources transfers the resources by using the default resource transfer flow; since the default resource transfer flow further includes the process of verifying the transfer password while transferring resources, the security of the transfer account number while transferring resources can be ensured.

Through binding the transfer account number to the device identity and storing it so as to be capable of determining whether to directly transfer the resources according to the physiological characteristic corresponding to the bound device identity when receiving the resource transfer request sent by the transfer account number, the device for transferring resources provided by embodiments of the present disclosure simplifies the verification flow while transferring the resources.

The device for transferring resources provided in embodiments of the present disclosure establishes the physiological characteristic model for the transfer account number by using the received physiological characteristic collected by at least one mobile device bound to the transfer account number, or, corrects the physiological characteristic model of the transfer account number by using the received physiological characteristic when the physiological characteristic model of the transfer account number is stored and the physiological characteristic is matched with the physiological characteristic model; and establishes the physiological characteristic model according to the course of learning, and continuously updates and perfects the physiological characteristic model, so that the physiological characteristic model can identify the user corresponding to the transfer account number more precisely, so as to improve the resource transfer security.

The device for transferring resources provided by embodiments of the present disclosure, when receiving the physiological characteristic, acquires the device identity sent together with the physiological characteristic, and sends the abnormality prompt message to the transfer account number when the device identity was bound to the transfer account number in the past and is not bound to the transfer account number currently; so as to be capable of informing the abnormality to the user in time, thus improving the user experience and security.

With respect to the devices in the above embodiments, the specific manners for performing operations for individual modules therein have been described in detail in the embodiments regarding the methods, which will not be elaborated herein.

According to an exemplary embodiment of the present disclosure, there is provided a device for transferring resources, which is applied in a server 140 in an implementation circumstance as shown in Fig. 1, and capable of implementing the method for transferring resources provided by the present disclosure. The device for transferring resources includes: a processor and a memory for storing instructions executable by the processor;
wherein the processor is configured to:
receive a resource transfer request of requesting to transfer resources sent by a transfer account number, and record a receiving moment;
detect whether a physiological characteristic collected by a mobile device bound to the transfer account number is received within a predetermined time period that includes the receiving moment; and
if detecting that the physiological characteristic collected by the mobile device bound to the transfer account number is received within the predetermined time period that includes the receiving moment, transfer the resources when the physiological characteristic is matched with a stored physiological characteristic model of the transfer account number.

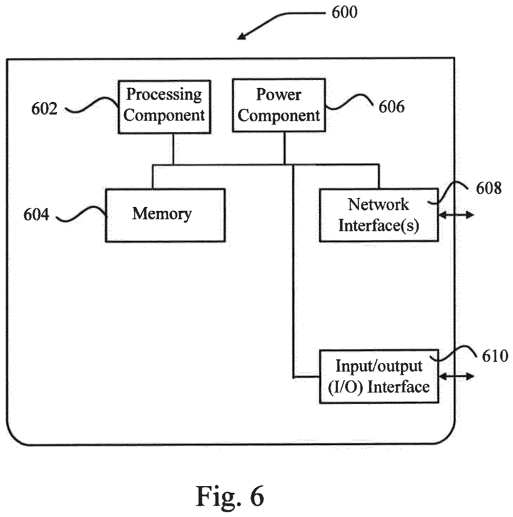

Fig. 6 is a block diagram of a device for transferring resources, according to an exemplary embodiment. For example, the device 600 may be provided as a server. Referring to Fig. 6, the device 600 includes a processing component 602 that further includes one or more processors, and memory resources represented by a memory 604 for storing instructions executable by the processing component 602, such as application programs. The application programs stored in the memory 604 may include one or more modules each corresponding to a set of instructions. Further, the processing component 602 is configured to execute the instructions to perform the above method for transferring resources.

The device 600 may also include a power component 606 configured to perform power management of the device 600, wired or wireless network interface(s) 608 configured to connect the device 600 to a network, and an input/output (I/O) interface 610. The device 600 may operate based on an operating system stored in the memory 604, such as Windows ServerTM, Mac OS XTM, UnixTM, LinuxTM, FreeBSDTM, or the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for transferring resources, the method comprising:
receiving (201) at a server, from a transfer request terminal, a resource transfer request requesting to electronically transfer resources sent using a transfer account number;
determining (202) at the server whether a physiological characteristic of a user, detected by a mobile device bound to the transfer account number, is received; and
in response to determining that the physiological characteristic detected by the mobile device bound to the transfer account number is received, transferring (203), by the server, the resources when the physiological characteristic is matched with a stored physiological characteristic model of the transfer account number, the resources being transferred according to a simplified resource transfer flow, the simplified resource transfer flow being to directly transfer the resources, or being to transfer the resources by skipping at least one of verifications of a transfer password, a verification code or received dynamic information required when transferring the resources;
wherein the method further comprises transferring the resources by using a default resource transfer flow when the physiological characteristic is not matched with the stored physiological characteristic model of the transfer account number, the default resource transfer flow at least comprising verifying a transfer password required when transferring the resources;
wherein the method further comprises receiving, at the server from the mobile device, physiological characteristics collected at predetermined time intervals or in real time; and
determining (202) whether the physiological characteristic of a user detected by the mobile device bound to the transfer account number is received comprises:
determining (301) the receiving time at which the resource transfer request is received;
detecting (302) whether a physiological characteristic collected by the mobile device bound to the transfer account number is received within a predetermined time period that contains the receiving time; **characterised by**:
detecting (d1) whether an abnormity prompting condition is satisfied when receiving the physiological characteristic sent by the mobile device bound to the transfer account number, the abnormity prompting condition comprising that the acquired device identity sent together with the physiological characteristic was bound to the transfer account number in the past and is not bound to the transfer account number currently; and
if the abnormity prompting condition exists, sending (d2) an abnormality prompt message to the transfer account number.

2. The method according to claim 1, **characterized in that**, the method further comprises:
receiving (b1) a setting command to bind the mobile device to the transfer account number; and
binding (b2) a device identity of the mobile device selected in the setting command to the transfer account number.

3. The method according to any preceding claim, **characterized in that**, the method further comprises:
when no physiological characteristic model of the transfer account number is stored, establishing (c2) a physiological characteristic model of the transfer account number by using the received physiological characteristic; and
when the physiological characteristic model of the transfer account number is stored, correcting (c3) the physiological characteristic model of the transfer account number by using the received physiological characteristic if the physiological characteristic is matched with the physiological characteristic model.

4. A server for transferring resources, the server comprising:
a first receiving module (402) configured to receive a resource transfer request requesting to electronically transfer resources sent using a transfer account number;
a first detection module (404, 504) configured to detect whether a physiological characteristic collected by a mobile device bound to the transfer account number is received;
a first transfer module (406, 506) configured to, if the first detection module (404, 504) detects that the physiological characteristic collected by the mobile device bound to the transfer account number is received, transfer the resources when the physiological characteristic is matched with a stored physiological characteristic model of the transfer account number, the first transfer module (406, 506) being further configured to transfer the resources according to a simplified resource transfer flow, the simplified resource transfer flow being to directly transfer the resources, or being to transfer the resources by skipping at least one of verifications of a transfer password, a verification code or received dynamic information required when transferring the resources; and
a second transfer module (522) configured to transfer the resources by using a default resource transfer flow when the physiological characteristic is not matched with the stored physiological characteristic model of the transfer account number, the default resource transfer flow at least comprising verifying a transfer password required when transferring the resources;
wherein the first detection module is configured to receive physiological characteristics from the mobile device at predetermined time intervals or in real time; and
the first detection module (504) comprises:
a determination submodule (504a) configured to determine a receiving time of receiving the resource transfer request;
a detection submodule (504b) configured to detect whether a physiological characteristic collected by the mobile device bound to the transfer account number is received within a predetermined time period containing the receiving time determined by the determination submodule (504a); the server being **characterised by** further comprising:
a second detection module (518) configured to detect whether an abnormity prompting condition is satisfied when receiving the physiological characteristic sent by the mobile device bound to the transfer account number, the abnormity prompting condition comprising that the acquired device identity sent together with the physiological characteristic was bound to the transfer account number in the past and is not bound to the transfer account number currently; and
a sending module (520) configured to send an abnormality prompt message to the transfer account number when the second detection module (518) detects the existence of the abnormity prompting condition.

5. The server according to claim 4, **characterized in that**, the server further comprises:
a second receiving module (508) configured to receive a setting command to bind the mobile device to the transfer account number; and
a binding module (510) configured to bind a device identity of the mobile device selected in the setting command received by the second receiving module (508) to the transfer account number.

6. The server according to any of claims 4 or 5, **characterized in that**, the server further comprises:
an establishing module (514) configured to, when no physiological characteristic model of the transfer account number is stored, establish a physiological characteristic model of the transfer account number by using the received physiological characteristic; and
a correction module (516) configured to, when the physiological characteristic model of the transfer account number is stored, correct the physiological characteristic model of the transfer account number by using the received physiological characteristic if the physiological characteristic is matched with the physiological characteristic model.

7. A computer program which when executed on a processor of a server causes it to perform a method according to any one of claims 1 to 3.

## Patentansprüche

1. Verfahren zur Übertragung von Ressourcen, wobei das Verfahren Folgendes aufweist:
an einem Server Empfangen (201) einer Ressourcenübertragungsanforderung von einem Übertragungsanforderungsendgerät, die das elektronische Übertragen von unter Verwendung einer Übertragungskontonummer gesendeten Ressourcen anfordert;
am Server Bestimmen (202), ob eine physiologische Eigenschaft eines Benutzers, die durch ein an die Übertragungskontonummer gebundenes Mobilgerät erkannt wird, empfangen wird; und
als Reaktion auf das Bestimmen, dass die durch das an die Übertragungskontonummer gebundene Mobilgerät erkannte physiologische Eigenschaft empfangen wird, Übertragen (203) der Ressourcen durch den Server, wenn die physiologische Eigenschaft mit einem gespeicherten Modell der physiologischen Eigenschaft der Übertragungskontonummer übereinstimmt, wobei die Ressourcen gemäß einem vereinfachten Ressourcenübertragungsfluss übertragen werden, wobei der vereinfachte Ressourcenübertragungsfluss zum direkten Übertragen der Ressourcen dient oder zum Übertragen der Ressourcen durch Überspringen von wenigstens einer von Verifizierungen eines Übertragungskennworts, eines Verifikationskodes oder empfangener dynamischer Informationen, die bei Übertragung der Ressourcen erforderlich sind, dient;
wobei das Verfahren ferner das Übertragen der Ressourcen mithilfe eines Standard-Ressourcenübertragungsflusses aufweist, wenn die physiologische Eigenschaft nicht mit dem gespeicherten Modell der physiologischen Eigenschaft der Übertragungskontonummer übereinstimmt, wobei der Standard-Ressourcenübertragungsfluss wenigstens das Verifizieren eines Übertragungskennworts aufweist, das bei Übertragung der Ressourcen erforderlich ist;
wobei
das Verfahren ferner das Empfangen, am Server, von in vorbestimmten Zeitabständen oder in Echtzeit erfassten physiologischen Eigenschaften vom Mobilgerät aufweist und
das Bestimmen (202), ob die physiologische Eigenschaft eines Benutzers, die durch das an die Übertragungskontonummer gebundene Mobilgerät erkannt wird, empfangen wird, Folgendes aufweist:
Bestimmen (301) der Empfangszeit, zu der die Ressourcenübertragungsanforderung empfangen wird;
Erkennen (302), ob eine physiologische Eigenschaft, die durch das an die Übertragungskontonummer gebundene Mobilgerät erfasst wird, innerhalb einer vorbestimmten Zeitspanne, die die Empfangszeit enthält, empfangen wird; **gekennzeichnet durch**:
Erkennen (d1), ob eine Abnormitätshinweisbedingung erfüllt wird, wenn die physiologische Eigenschaft empfangen wird, die von dem an die Übertragungskontonummer gebundenen Mobilgerät gesendet wird, wobei die Abnormitätshinweisbedingung aufweist, dass die erfasste Gerätekennung, die zusammen mit der physiologischen Eigenschaft gesendet wurde, in der Vergangenheit an die Übertragungskontonummer gebunden war und aktuell nicht an die Übertragungskontonummer gebunden ist; und,
falls die Abnormitätshinweisbedingung besteht, Senden (d2) einer Abnormalitätshinweisnachricht an die Übertragungskontonummer.

2. Verfahren nach Anspruch 1, **dadurch gekennzeichnet, dass** das Verfahren ferner Folgendes aufweist:
Empfangen (b1) eines Einstellungsbefehls zum Binden des Mobilgeräts an die Übertragungskontonummer; und
Binden (b2) einer Gerätekennung des im Einstellungsbefehl ausgewählten Mobilgeräts an die Übertragungskontonummer.

3. Verfahren nach einem der vorhergehenden Ansprüche,
**dadurch gekennzeichnet, dass** das Verfahren ferner Folgendes aufweist:
wenn kein Modell der physiologischen Eigenschaft der Übertragungskontonummer gespeichert ist, Herstellen (c2) eines Modells der physiologischen Eigenschaft der Übertragungskontonummer mithilfe der empfangenen physiologischen Eigenschaft; und,
wenn das Modell der physiologischen Eigenschaft der Übertragungskontonummer gespeichert ist, Korrigieren (c3) des Modells der physiologischen Eigenschaft der Übertragungskontonummer mithilfe der empfangenen physiologischen Eigenschaft, falls die physiologische Eigenschaft mit dem Modell der physiologischen Eigenschaft übereinstimmt.

4. Server zur Übertragung von Ressourcen, wobei der Server Folgendes aufweist:
ein erstes Empfangsmodul (402), das zum Empfangen einer Ressourcenübertragungsanforderung konfiguriert ist, die das elektronische Übertragen von unter Verwendung einer Übertragungskontonummer gesendeten Ressourcen anfordert;
ein erstes Erkennungsmodul (404, 504), das zum Erkennen, ob eine physiologische Eigenschaft eines Benutzers, die durch ein an die Übertragungskontonummer gebundenes Mobilgerät erfasst wird, empfangen wird, konfiguriert ist;
ein erstes Übertragungsmodul (406, 506), das konfiguriert ist zum, falls das erste Erkennungsmodul (404, 504) erkennt, dass die durch das an die Übertragungskontonummer gebundene Mobilgerät erfasste physiologische Eigenschaft empfangen wird, Übertragen (203) der Ressourcen, wenn die physiologische Eigenschaft mit einem gespeicherten Modell der physiologischen Eigenschaft der Übertragungskontonummer übereinstimmt, wobei das erste Übertragungsmodul (406, 506) ferner zum Übertragen der Ressourcen gemäß einem vereinfachten Ressourcenübertragungsfluss konfiguriert ist, wobei der vereinfachte Ressourcenübertragungsfluss zum direkten Übertragen der Ressourcen dient oder zum Übertragen der Ressourcen durch Überspringen von wenigstens einer von Verifizierungen eines Übertragungskennworts, eines Verifikationskodes oder empfangener dynamischer Informationen, die bei Übertragung der Ressourcen erforderlich sind, dient; und
ein zweites Übertragungsmodul (522), das zum Übertragen der Ressourcen mithilfe eines Standard-Ressourcenübertragungsflusses konfiguriert ist, wenn die physiologische Eigenschaft nicht mit dem gespeicherten Modell der physiologischen Eigenschaft der Übertragungskontonummer übereinstimmt, wobei der Standard-Ressourcenübertragungsfluss wenigstens das Verifizieren eines Übertragungskennworts aufweist, das bei Übertragung der Ressourcen erforderlich ist;
wobei
das erste Erkennungsmodul zum Empfangen von physiologischen Eigenschaften in vorbestimmten Zeitabständen oder in Echtzeit vom Mobilgerät konfiguriert ist und
das erste Erkennungsmodul (504) Folgendes aufweist:
ein Bestimmungsuntermodul (504a), das zum Bestimmen einer Empfangszeit des Empfangens der Ressourcenübertragungsanforderung konfiguriert ist;
ein Erkennungsuntermodul (504b), das zum Erkennen, ob eine physiologische Eigenschaft, die durch das an die Übertragungskontonummer gebundene Mobilgerät erfasst wird, innerhalb einer vorbestimmten Zeitspanne empfangen wird, die die vom Bestimmungsuntermodul (504a) bestimmte Empfangszeit enthält, konfiguriert ist; wobei der Server **dadurch gekennzeichnet ist, dass** er ferner Folgendes aufweist:
ein zweites Erkennungsmodul (518), das zum Erkennen, ob eine Abnormitätshinweisbedingung erfüllt wird, wenn die physiologische Eigenschaft empfangen wird, die von dem an die Übertragungskontonummer gebundenen Mobilgerät gesendet wird, konfiguriert ist, wobei die Abnormitätshinweisbedingung aufweist, dass die erfasste Gerätekennung, die zusammen mit der physiologischen Eigenschaft gesendet wurde, in der Vergangenheit an die Übertragungskontonummer gebunden war und aktuell nicht an die Übertragungskontonummer gebunden ist; und
ein Sendemodul (520), das zum Senden einer Abnormalitätshinweisnachricht an die Übertragungskontonummer, wenn das zweite Erkennungsmodul (518) das Bestehen der Abnormitätshinweisbedingung erkennt, konfiguriert ist.

5. Server nach Anspruch 4, **dadurch gekennzeichnet, dass** der Server ferner Folgendes aufweist:
ein zweites Empfangsmodul (508), das zum Empfangen eines Einstellungsbefehls zum Binden des Mobilgeräts an die Übertragungskontonummer konfiguriert ist; und
ein Bindemodul (510), das zum Binden einer Gerätekennung des im durch das zweite Empfangsmodul (508) empfangenen Einstellungsbefehl ausgewählten Mobilgeräts an die Übertragungskontonummer konfiguriert ist.

6. Sever nach einem der Ansprüche 4 oder 5, **dadurch gekennzeichnet, dass** der Server ferner Folgendes aufweist:
ein Herstellungsmodul (514), das, wenn kein Modell der physiologischen Eigenschaft der Übertragungskontonummer gespeichert ist, zum Herstellen eines Modells der physiologischen Eigenschaft der Übertragungskontonummer mithilfe der empfangenen physiologischen Eigenschaft konfiguriert ist; und
ein Korrekturmodul (516), das, wenn das Modell der physiologischen Eigenschaft der Übertragungskontonummer gespeichert ist, zum Korrigieren des Modells der physiologischen Eigenschaft der Übertragungskontonummer mithilfe der empfangenen physiologischen Eigenschaft, falls die physiologische Eigenschaft mit dem Modell der physiologischen Eigenschaft übereinstimmt, konfiguriert ist.

7. Computerprogramm, das bei Ausführung in einem Prozessor eines Servers diesen zum Durchführen eines Verfahrens nach einem der Ansprüche 1 bis 3 veranlasst.

## Revendications

1. Procédé de transfert de ressources, le procédé comprenant :
recevoir (201) à un serveur, d'un terminal de requête de transfert, une requête de transfert de ressources demandant de transférer électroniquement des ressources envoyée en utilisant un numéro de compte de transfert ;
déterminer (202) au serveur si une caractéristique physiologique d'un utilisateur, détectée par un dispositif mobile lié au numéro de compte de transfert, est reçue ; et
en réponse au fait de déterminer que la caractéristique physiologique détectée par le dispositif mobile lié au numéro de compte de transfert est reçue, transférer (203) les ressources, par le serveur, lorsque la caractéristique physiologique concorde avec un modèle de caractéristique physiologique stocké du numéro de compte de transfert, les ressources étant transférées conformément à un flux de transfert de ressources simplifié, le flux de transfert de ressources simplifié consistant à transférer les ressources directement, ou bien consistant à transférer les ressources en sautant au moins l'un d'entre des vérifications de mot de passe, un code de vérification ou une information dynamique reçue requise en transférant des ressources ;
où
le procédé comprend en outre transférer les ressources en utilisant un flux de transfert de ressources par défaut lorsque la caractéristique physiologique ne concorde pas avec le modèle de caractéristique physiologique stocké du numéro de compte de transfert, le flux de transfert de ressources par défaut comprenant au moins vérifier un mot de passe de transfert requis en transférant des ressources ;
où le procédé comprend en outre recevoir, au serveur du dispositif mobile, des caractéristiques physiologiques recueillies à des intervalles de temps prédéterminés ou en temps réel ; et
déterminer (202) si la caractéristique physiologique d'un utilisateur détectée par le dispositif mobile lié au numéro de compte de transfert est reçue comprend :
déterminer (301) l'heure de réception à laquelle la requête de transfert de ressources est reçue ;
détecter (302) si une caractéristique physiologique recueillie par le dispositif mobile lié au numéro de compte de transfert est reçue dans une période de temps prédéterminée qui contient l'heure de réception ; caractérisé en :
détectant (d1) si une condition d'alerte d'anomalie est satisfaite en recevant la caractéristique physiologique envoyée par le téléphone mobile lié au numéro de compte de transfert, la condition d'alerte d'anomalie comprenant que l'identité du dispositif acquise envoyée avec la caractéristique physiologique était liée au numéro de compte de transfert par le passé et n'est pas actuellement liée au numéro de compte de transfert ; et
si la condition d'alerte d'anomalie existe, envoyer (d2) un message d'alerte d'anomalie au numéro de compte de transfert.

2. Procédé selon la revendication 1, **caractérisé en ce que** le procédé comprend en outre :
recevoir (b1) une commande de réglage pour lier le dispositif mobile au numéro de compte de transfert ; et
lier (b2) une identité de dispositif du dispositif mobile sélectionné dans la commande de réglage au numéro de compte de transfert.

3. Procédé selon l'une quelconque des revendications précédentes, **caractérisé en ce que** le procédé comprend en outre :
lorsque aucun modèle de caractéristique physiologique du numéro de compte de transfert n'est stocké, établir (c2) un modèle de caractéristique physiologique du numéro de compte de transfert en utilisant la caractéristique physiologique reçue ; et
lorsque le modèle de caractéristique physiologique du numéro de compte de transfert est stocké, corriger (c3) le modèle de caractéristique physiologique du numéro de compte de transfert en utilisant la caractéristique physiologique reçue si la caractéristique physiologique concorde avec le modèle de caractéristique physiologique.

4. Serveur de transfert de ressources, le serveur comprenant :
un premier module de réception (402) configuré pour recevoir une requête de transfert de ressources demandant de transférer électroniquement des ressources en utilisant un numéro de compte de transfert ;
un premier module de détection (404, 504) configuré pour détecter si une caractéristique physiologique recueillie par un dispositif mobile lié au numéro de compte de transfert est reçue ;
un premier module de transfert (406, 506) configuré pour, si le premier module de détection (404, 504) détecte que la caractéristique physiologique recueillie par le dispositif mobile lié au numéro de compte de transfert est reçue, transférer les ressources lorsque la caractéristique physiologique concorde avec un modèle de caractéristique physiologique stocké du numéro de compte de transfert, le premier module de transfert (406, 506) étant configuré en outre pour transférer les ressources conformément à un flux de transfert de ressources simplifié, le flux de transfert de ressources simplifié consistant à transférer les ressources directement, ou bien à transférer les ressources en sautant au moins l'un d'entre des vérifications de mot de passe de transfert, un code de vérification ou une information dynamique reçue requis en transférant des ressources ; et
un deuxième module de transfert (522) configuré pour transférer les ressources en utilisant un flux de transfert de ressources par défaut lorsque la caractéristique physiologique ne concorde pas avec le modèle de caractéristique physiologique stocké du numéro de compte de transfert, le flux de transfert de ressources par défaut comprenant au moins vérifier un mot de passe de transfert requis en transférant les ressources ;
dans lequel
le premier module de détection est configuré pour recevoir des caractéristiques physiologiques du dispositif mobile à des intervalles de temps prédéterminés ou en temps réel ; et
le premier module de détection (504) comprend :
un sous-module de détermination (504a) configuré pour déterminer une heure de réception de la réception de la requête de transfert de ressources ;
un sous-module de détection (504b) configuré pour détecter si une caractéristique physiologique recueillie par le dispositif mobile lié au numéro de compte de transfert est reçue dans une période de temps prédéterminée contenant l'heure de réception déterminée par le sous-module de détermination (504a) ; le serveur étant caractérisé en comprenant en outre :
un deuxième module de détection (518) configuré pour détecter si une condition d'alerte d'anomalie est satisfaite en recevant la caractéristique physiologique envoyée par le dispositif mobile lié au numéro de compte de transfert, la condition d'alerte d'anomalie comprenant que l'identité du dispositif acquise envoyée avec la caractéristique physiologique était liée au numéro de compte de transfert par le passé et n'est pas liée actuellement au numéro de compte de transfert ; et
un module d'envoi (520) configuré pour envoyer un message d'alerte d'anomalie au numéro de compte de transfert lorsque le deuxième module de détection (518) détecte l'existence de la condition d'alerte d'anomalie.

5. Serveur selon la revendication 4, **caractérisé en ce que** le serveur comprend en outre :
un deuxième module de réception (508) configuré pour recevoir une commande de réglage pour lier le dispositif mobile au numéro de compte de transfert ; et
un module de liaison (510) configuré pour lier une identité de dispositif du dispositif mobile sélectionné dans la commande de réglage reçue par le deuxième module de réception (508) au numéro de compte de transfert.

6. Serveur selon l'une quelconque des revendications 4 ou 5, **caractérisé en ce que** le serveur comprend en outre :
un module d'établissement (514) configuré pour, lorsque aucun modèle de caractéristique physiologique du numéro de compte de transfert n'est stocké, établir un modèle de caractéristique physiologique du numéro de compte de transfert en utilisant la caractéristique physiologique reçue ; et
un module de correction (516) configuré pour, lorsque le modèle de caractéristique physiologique du numéro de compte de transfert est stocké, corriger le modèle de caractéristique physiologique du numéro de compte de transfert en utilisant la caractéristique physiologique reçue si la caractéristique physiologique concorde avec le modèle de caractéristique physiologique.

7. Programme informatique qui, lorsque exécuté sur un processeur d'un serveur, fait qu'il mette en œuvre un procédé selon l'une quelconque des revendications 1 à 3.
